# EUROPEAN PATENT APPLICATION

(11) **EP 3 654 114 A1**
(43) Date of publication of application: **20.05.2020**
(21) Application number: 18206649.8
(22) Date of filing: 16.11.2018
(51) Int. Cl.: G05B 13/02

(54) **PARAMETER MANAGER, CENTRAL DEVICE AND METHOD OF ADAPTING OPERATIONAL PARAMETERS IN A TEXTILE MACHINE**

(71) Applicant: Maschinenfabrik Rieter AG, 8406 Winterthur (CH)
(72) Inventor: BLASER, Niklaus, 8311 Brütten (CH); GRIESSHAMMER, Christian, 8404 Winterthur (CH)

(57) **Abstract**

It is proposed a parameter manager (2) for managing parameter of machines (4) and processes within spinning mills (A, B, C) in respect with at least one of production quality, usage of raw material, reduced waste, conversion costs like costs of energy, labour costs, maintenance costs and consumables costs as well as increase of production volume and ideal batch allocation to different machines (4) within the spinning mill (A, B, C). According to the invention said parameter manager (2) uses artificial intelligence algorithms comprising neural networks (12) alone or in combination with case based reasoning (CBR) and traditional mathematical models. The invention concerns as well a central device and a method of adapting operational parameter in a textile machine (4).

## Description

### Field of invention

The invention concerns a parameter manager for determining adapted operational parameters of textile machines and processes within spinning mills, a method of determining adapted operational parameters of machines and processes within spinning mills, a central device connected to at least one terminal device provided in each of a plurality of spinning mills and a method of adapting operational parameters in a textile machine according to the independent claims.

### Description of related art

Various raw materials are processed in spinning mills in several processing steps via intermediate products into yarns as end products. The raw materials pass through various work stations such as blowing, opening, cleaning, mixing, carding, combing, drafting, roving, fine spinning and finally spooling and winding. Machines are used for most steps which are equipped with sensors. The sensor signals are used for controlling the processing and/or for monitoring the quality of the produced intermediate and end products. There are several documents which are disclosing methods for optimizing a manufacturing process in a textile plant.

WO2010054497A1 relates to a method for optimizing with regard to quality, productivity and/or profitability a manufacturing process in a textile plant such as a spinning mill, weaving mill or embroidery plant, according to the preamble of the first claim. The method is applied when raw material is processed in the manufacturing process in several processing steps into intermediate products and an end product is produced. Parameters of the raw material, the intermediate products and/or the end product are measured in at least two different processing steps, stored in a database and linked in an index file. Thus the employed qualities of a lot are as close as possible to the quality of a lot which can also be designated as necessary quality of a lot in order to offer the yarn quality provided for a delivery agreement.

DE3924779 discloses a method and an apparatus for operating a process line in a spinning mill comprising various regions, for example comprising at least the regions blow room, spinning preparation and spinning, with each region being put together from several textile machines which operate in series and/or in parallel and form a machine plane, and with the individual series connected textile machines producing different fibre structures, wherein raw fiber material which enters into the blow room is obtained as spun yarn at the output of the spinning mill. The method is characterized in that one measures at least one quality feature of the respectively produced fibre structure at at least some textile machines in each of the named regions and uses it to regulate the respective textile machine or an earlier textile machine of the same region; and in that correction values are formed from at least some of the quality features measured in the spinning preparation and spinning regions and are used to influence the operation of a textile machine of an earlier region.

EP0541483 discloses a spinning mill having a process control computer for at least one group of machines, each machine of the group being provided with its own control which controls the actuator system of the machine (together with any possible auxiliary assemblies assigned to this machine). At least one network for the bidirectional communication between the computer and each machine of the group is provided. Control instructions from the process control computer are directed during the operation of the system to the machine controls via the network. Each machine control passes on the control instructions to the actuator system controlled by this control, the control instructions being converted, if necessary, by the machine control into control signals suitable for the actuator system.

An approach to estimation of machine settings for spinning of Yarn was given in the article Sevilla-Villanueva B., Sànchez-Marrè M., Fischer T.V. (2014) Estimation of Machine Settings for Spinning of Yarns - New Algorithms for Comparing Complex Structures. In: Lamontagne L., Plaza E. (eds) Case-Based Reasoning Research and Development. ICCBR 2014. Lecture Notes in Computer Science, vol 8765. Springer, Ch*am.* Furthermore, the approach of case-based reasoning is given in the article Sevilla Villanueva B., Sanchez-Marre M. (2012) Case-Based Reasoning Applied to Textile Industry Processes. In: Agudo B.D., Watson I. (eds) Case-Based Reasoning Research and Development. ICCBR 2012. Lecture Notes in Computer Science, vol 7466. Springer, Berlin, Heidelberg*.*

The limitation of the CBR base approach lies in the fact that the new settings can only be determined within the given solution space of already existing data in the database, but not beyond.

### Summary of the invention

The purpose of this invention is to provide a parameter manager, a method of managing parameters of machines and processes within spinning mills, a central device and a method of adapting operational parameters in a textile machine in order to increase production quality, reduce usage of raw material, reduced waste, and minimizing conversion costs like costs of energy, labour costs, maintenance costs and consumables costs as well as increase of production volume and ideal batch allocation to different machines within the spinning mill.

This purpose is achieved by a parameter manager, a method of managing parameters of machines and processes within spinning mills, a central device and a method of adapting operational parameters in a textile machine according to the independent claims. Dependent claims give advantageous embodiments.

Particularly, this is solved by a parameter manager according to the preamble of the claim 1, which is characterised in that said parameter manager comprises a processing unit comprising at least a neural network, said neural network uses algorithms for or derived from supervised, unsupervised, machine and/or deep learning.

Preferably, the processing unit further comprises a Cased-Based Reasoning (CBR) system and a mathematical control and filtering device for checking the results of the parameters calculated by the neural network and said processing unit is adapted to weighted recalculate both calculated parameters based on a probability function or to choose according to a given probability.

Preferably, the parameter manager manages parameters defining at least one of the following
- raw material input;
- allocations of spinning machine to individual batches mix of raw material qualities;
- specific allocation of bales in a blow room;
- optimal use of textile machines;
- the operation of the textile machines;
- specific components of the textile machines;
- process settings and definitions;
- settings of auxiliary systems;
- definition of the material flow within the spinning mill;
- coordination of operators and their tasks with the spinning mill;
- coordination and allocation of human resources (labour) to different process steps.
- preventive or predictive maintenance of a textile machine.

The aims of the present invention are as well solved by a method of determining adapted operational parameters of machines and processes within spinning mills according to the corresponding independent claim, the method is characterised in the step of determining adapted parameters based on a neural network, said neural network uses algorithms for or derived from supervised, unsupervised, machine and/or deep learning.

Preferably, the method comprises the step of checking said adapted parameter calculated by the neural network by Cased-Based Reasoning (CBR) and traditional mathematical models and based on a probability function, both calculated parameters are weighted recalculated or chosen according to a given probability.

Preferably, the method comprises the step of training the neural network in a first place on the basis of data with high quality of reliability; preferably the training data is treated beforehand with a Case-Based Reasoning (CBR) and/or traditional mathematical models.

Preferably, within the method said neural network uses as data
- operational information from spinning mills, textile machines, sensors and auxiliary spinning devices; and/or
- reference data of quality surveyed production tests and trials; and/or
- empirical data collected from textile specialists of spinning mills or textile technologists and/or
- newly determined parameters.

Preferably, within the method said neural network accesses unstructured databases alone or in combination structured databases. In the method, the amount of data and the scope of data (additional data fields) increase over time. The use of traditional SQL databases generates some limits to this aspect, which can be advantageously overcome by NoSQL databases.

Preferably, within the method said algorithms of the neural network use for data of different quality levels different weightings. Advantageously, the quality level of collected data (trust worthiness, reproducibility, quality checks, etc.) is in that way taken into account.

The aims of the present invention are as well solved by a central device connected to at least one terminal device provided in each of a plurality of spinning mills via a communication network comprising:
- a receiving section adapted to receive
   ∘ plant identification information to identify a spinning mill;
   ∘ machine identification information to identify each textile machine of a plurality of textile machines;
   ∘ unit identification information to identify each unit of a plurality of units of the textile machine; and
   ∘ a plurality of pieces of operational information from spinning mills, textile machines, sensors and auxiliary spinning devices;
- a first database in which the plurality of pieces of operational information received by the receiving section in association with the plant identification information, the machine identification information, and the unit identification information is stored;
- a second database in which reference data is stored regarding quality surveyed production tests and trials;
- a third database in which empirical data is stored collected from textile specialists of spinning mills or from textile technologists;
- a fourth database in which newly determined parameter data is stored;
- a parameter manager adapted to determine machine parameters based on information stored in the first, second, third and/or fourth database;
- wherein said parameter manager comprises a processing unit comprising at least a neural network using algorithms for or derived from supervised, unsupervised, machine and/or deep learning; and
- a transmission section adapted to transmit determined adapted machine parameters to the spinning mill, textile machines and/or the units.

Preferably, within the central device the processing unit further comprises a Cased-Based Reasoning (CBR) system and a mathematical control and filtering device for checking the results of the parameters calculated by the neural network and the processing unit is adapted to weighted recalculate both calculated parameters based on a probability function or to choose according to a given probability.

Preferably, within the central device the first, second, third and/or fourth database is an unstructured database. Advantageously, an increasing amount of data and the scope of data (additional data fields) over time can be handled in this way.

Preferably, within the central device a validity check section adapted to check the validity of the determined machine parameters by the parameter manager. Advantageously, the check section verifies the newly determined parameters of the machines and processes with the specified operation mode of the machine in order to avoid unspecified operational modes and prevent damages.

The aims of the present invention are as well solved by a method of adapting operational parameters of a textile machine, comprising the steps of
- measuring one or a plurality of pieces of operational information from a spinning mill, the textile machine and sensors;
- transmitting the measured operational information from the textile machine to a central device;
- determining by a parameter manager adapted machine parameters based on a first, second, third and/or fourth database using a neural network, said neural network comprise algorithms for or derived from supervised, unsupervised, machine and/or deep learning; wherein
   ∘ the first database in which the plurality of pieces of operational information in association with the plant identification information, the machine identification information, and the unit identification information is stored;
   ∘ the second database in which reference data is stored regarding quality surveyed production tests and trials;
   ∘ the third database in which empirical data is stored collected from textile specialists of spinning mills or from textile technologists;
   ∘ the fourth database in which newly determined parameters is stored;
- transmitting determined adapted parameters from the central device to the spinning mill; and
- adapting the parameters of the spinning mill, textile machines and/or the units.

Preferably, the method comprises the step of checking said adapted parameter calculated by the neural network by Cased-Based Reasoning (CBR) and traditional mathematical models and based on a probability function, both calculated parameters are weighted recalculated or chosen according to a given probability. The advantage of the proposed approach including neural network alone or in combination with Cased-Based Reasoning (CBR) lies in the fact that the new settings can be determined outside the given solution space of already existing data in the databases.

Preferably, the method comprises the step of determining by said parameter manager parameters defining at least one of the following
- raw material input;
- allocations of spinning machine to individual batches mix of raw material qualities;
- specific allocation of bales in a blow room;
- optimal use of textile machines;
- the operation of the textile machines;
- specific components of the textile machines;
- process settings and definitions;
- settings of auxiliary systems;
- definition of the material flow within the spinning mill;
- coordination of operators and their tasks with the spinning mill;
- coordination and allocation of human resources (labour) to different process steps.
- preventive or predictive maintenance of a textile machine.

Preferably, within the method said neural network accesses unstructured databases alone or in combination with structured databases.

Preferably, within the method said algorithms of the neural network use for data of different quality levels different weightings.

Preferably, within the method the parameters are adapted automatically or are displayed and adapted manually by an operator.

Preferably, the method comprises the step of checking the validity of proposed adapted parameters.

The benefit of the present invention lies in the potential of neural network approaches to learn and optimise parameters of spinning mill machines, systems and process settings within the currently available frame of data as well as beyond that. The invention is suited to come up with adapted parameters and will automatically update its predictions based on the data gained during the operation.

### Brief description of drawings

The invention will be better understood with the aid of the description of an embodiment given by way of example an illustrated by the figures, in which
- **Fig. 1**: shows an overview over the general configuration according to the invention; and
- **Fig. 2**: shows an overview of the general schema according to the present invention.

### Detailed description of the invention

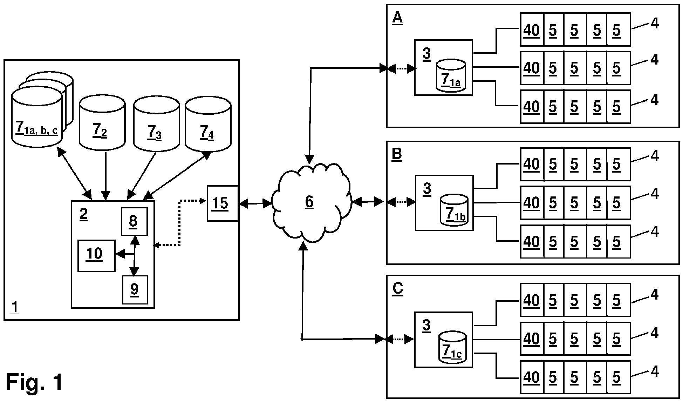

A first embodiment of the present invention will be described with reference to drawings. Fig. 1 is an outline of the general configuration according to the invention. Fig. 1 shows a central device 1 comprising a parameter manager 2 and a plurality of spinning mills A, B, C. Three spinning mills A, B, and C are used to describe the embodiment of the present invention. The number of spinning mills A, B, C is not limited to three and may be more than one. Each spinning mill comprises a terminal device 3, a number of textile machines 4, each having a control section 40 and a number of units 5. The central device 1, the terminal devices 3, the control sections 40 are connected each other via a communication network 6, such as, the Internet, a local area network (LAN), or a mobile telephone network. The central device 1 is, e.g., a server computer or a personal computer. Hereinafter, the central device 1 will be described as a server computer 1. The server computer 1 is connected to the terminal devices 3 provided in each spinning mill A, B, C via the communication network 6. Due to limitations of space of a drawing, three textile machines 4 are illustrated in each spinning mill A, B, C in Fig. 1. However, the number of the textile machines 4 is not limited to three, and may be more than one. Likewise, the number of units 5 may be more than one. Further, in the embodiments of the present invention, a different company owns a spinning mill A, a spinning mill B and a spinning mill C, respectively. However, one company may own a plurality of spinning mill. For example, one company may own spinning mills A and B, and another company may own a spinning mill C only.

The textile machine 4 is a machine configured with a plurality of the units 5. The textile machines 4 can be e.g., a bale opener, a card, a regulated or not regulated draw frame, a comber preparation machine or a comber, an end spinning device such as a ring or compact spinning machine, a rotor spinning machine, an air-jet spinning machine, an automatic winder, a roving frame, a weaving machine, a knitting machine, a yarn winding machine, a draw texturing machine, or the like. The spinning mills A, B, C comprise additionally auxiliary spinning devices like air pressure systems, transport systems, climate control systems, security and surveillance systems and the like.

In the embodiments of the present invention, a description will be made, as an example, on the assumption that the textile machine 4 is a rotor spinning machine in which a plurality of units 5 to produce high quality yarn from a roving. The textile machine 4 is provided with the control section 40 that controls each unit 5. Additionally the textile machine 4 is provided with a plurality of sensors in order to sense the quality of the processed material and get to know information about operational status on the components of each unit 5. The control section 40 outputs a plurality of pieces of information on quality features of material processed by the textile machines 4 and the units 5 and the actual parameters of the textile machine 4 to the terminal devices 3. Instead of a personal computer, the terminal device 3 may be a device dedicated for controlling the textile machine 4.

Examples of operation information on quality features of material processed by the textile machines 3 can be taken from Fig. 5, 6 of DE3924779A1 although others could be possible. The terminal device 3 of each spinning mill transmits the plurality of pieces of information on quality features of material processed by the textile machines 4 to the central device 1. The central device 1 comprises a receiving (and transmitting) section 15 adapted to receive
- plant identification information to identify a spinning mill A, B, C;
- machine identification information to identify each textile machine 4 of a plurality of textile machines 4 connected to the terminal device 3;
- unit identification information to identify each unit 5 of a plurality of units of the textile machine 4; and
- a plurality of pieces of operational information as shown below e.g. on quality features of material processed by the textile machines 4 and the units 5 and data collected from the spinning mill A, B, C.

Based on the plurality of information of the textile machines 4 and the units 5 the central device 1 determines by means of the parameter manager 2 adapted machine and process parameters.

The parameter according to the present invention and determined by the parameter manager 2 could be
- raw material parameters; e.g. as seen in Fig. 5 ("Rohmaterial") of DE3924779A1.
- production flow parameters, e.g. spinning plan and use of machines.
- maintenance and wear status of textile machines 4 and components;
- operator typical parameters, e.g. operator specific preferences and errors;
- quality parameter of intermediate and final products, e.g. mass variations, tenacities, fibre orientation or others as seen in Fig. 5, 6 of DE3924779A1;
- settings of the textile machines and components.

The server computer 1 is connected to four different databases 7_{1a, b, c}, 7₂, 7₃, 7₄.

The first reference database 7_{1a, b, c} is adapted to store a plurality of pieces of information received by the receiving section 15 in association with the plant identification information, the machine identification information, the unit identification information and the time. Each spinning mill A, B, C, etc. has an own database 7_{1a, b, c}, which stores locally collected data. The data from the database or at least parts of the data from these databases 7_{1a, b, c} are copied to the central device 1. This data comprises measured data from machines and sensors and covers all aspects of a spinning mill A, B, C. The amount of data and the scope of data (additional data fields) increase over time. The use of traditional SQL databases generates some limits to this aspect, which can be easily overcome by NoSQL databases.

Additionally the central device 1 is connected to a second reference database 7₂ in which reference values are stored regarding reference data of quality surveyed production tests and trials. As an example this could include setting parameters, raw material data, information about end and semi-finished product data and data about environmental and production process data.

The third reference database 7₃ comprises empirical data collected from textile specialists of spinning mills or textile technologists.

The fourth reference database 7₄ comprises newly determined parameter based on parameter request input 14 and data from the database 7_{1a, b, c}, 7₂, 7₃, 7₄.

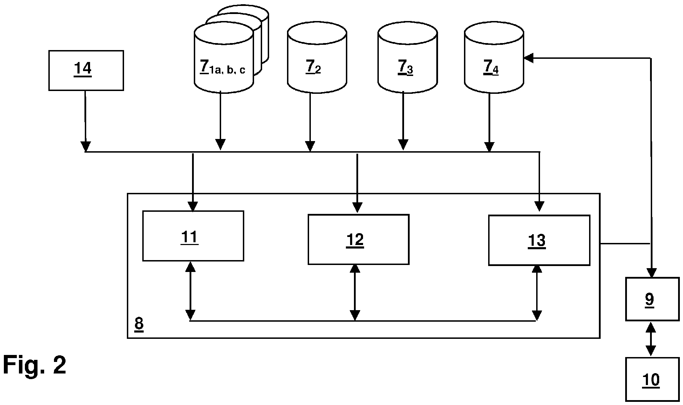

Although four different databases are shown in the Fig. 1, 2, it is clear that a single database could include all mentioned data. The mentioned data in the first, second, third and fourth database 7_{1a, b, c}, 7₂, 7₃, 7₄ can grow to a huge amount of data known as big data.

As mentioned already above the present invention uses unstructured databases (NoSQL databases, data warehouses or data lakes) alone or in combination with structured databases in spinning mill systems and platforms. Some of the currently known unstructured databases are Hadoop, Cassandra, Hypertable, Accumulo, Amazon Simple DB, Cloud Data, HPCC, Flink, Splice, MongoDB, Elastic Search, Couchbased Server, Couch DB, RethinkDB, RavenDB, MarkLogic Server, Clusterpoint Server, NeDB, Terrastore, JasDB, RaptorDB, Djoindb, EDB, Amisa Server, DensoDB, SisoDB, SDB, UnQLite, ThruDB, TimescaleDB. Many additional unstructured (NoSQL) databases exist for Key Value / Tuple Store databases, graph databases, multi-model databases, object databases, grid and cloud databases, XML databases, multidimensional databases and network model databases. The benefit using unstructured databases alone or in combination with structured databases is there qualification for big data analytics, machine learning and deep learning methodologies for the adaptation of spinning mill parameters and spinning mill processes.

Fig. 2 shows an overview of the general schema according to the present invention. It includes said databases 7_{1a, b, c}, 7₂, 7₃, 7₄ as well as a Case-Based Reasoning (CBR) system 11, a neural network 12 and a mathematical control and filtering device 13. According to the present invention the collected data is analysed using a processing unit 8 with artificial intelligence algorithms comprising a neural network 12 alone or in combination with Case-Based Reasoning (CBR) system 11 and traditional mathematical models used in the mathematical control and filtering device 13. The approach of case-based reasoning itself in spinning mills is given in the article *Case-Based Reasoning Applied to Textile Industry Processes* as cited in the prior art section.

During the method according to the present invention, in a first step the neural network 12 is trained or trains itself with data from the databases 7_{1a, b, c}, 7₂, 7₃, 7₄. During this step, algorithms are built in order to solve in a second step a specific parameter request 14 by the neural network 12. Such a specific parameter request 14 can be a request for any parameter as defined above. In a third step, the parameters calculated with the neural network 12 are checked on plausibility by the Case-Based Reasoning (CBR) system 11 and/or the mathematical control and filtering device 13. As a result, the difference between the calculated parameters from the neural network 12 and the check by the Case-Based Reasoning (CBR) system 11 and/or the mathematical control and filtering device 13 is given by a probability function. Based on the probability function, within the processing unit 8 both calculated parameters are weighted recalculated or chosen according to the probability.

Before the training of the neural network 12, when only limited data is available, it would be possible to train the neural network 12 on the basis of data from the database 7₂ which are data with high quality of reliability. Thereby the data could be treated beforehand with the Case-Based Reasoning (CBR) system 11 and/or the mathematical control and filtering device 13.

When a parameter request input 14 is send to the processing unit 8 new parameters 9 are determined by the neural network 12 alone or in combination with Case-Based Reasoning CBR system 11 and traditional mathematical models. The neural network 12 can comprise algorithms for supervised, unsupervised, machine and/or deep learning. The approach of using only the neural network 12 requires a lot of data (Big Data) for training the neural network 12 before it reaches its operational performance (unsupervised learning approach, deep learning). In order to minimize this effort, results from CBR and input data from database 7₂, 7₃ are taken into account and lead to a supervised learning approach, while supporting the feature extraction process which is characterising the machine learning process. The data in the databases 7_{1a, b, c}, 7₂, 7₃, 7₄ has different origin and therefore different quality levels e.g. trust worthiness, reproducibility, quality checks, etc. Thus, the data from the databases 7_{1a, b, c}, 7₂, 7₃, 7₄ might be weighted in the mentioned algorithms within the processing unit 8 according to different quality levels. The benefit of this approach lies in the fact that the overall quality of new parameters can be controlled and disturbing impacts of unqualified data can be limited.

As a result, newly determined parameters 9 are outputted. Parameters 9 in the present invention can be parameters defining
- raw material input;
- allocations of spinning machine to individual batches mix of raw material qualities;
- specific allocation of bales in a blow room;
- optimal use of textile machines 4;
- the operation of the textile machines 4;
- specific components of the textile machines 4;
- process settings and definitions;
- settings of auxiliary systems;
- definition of the material flow within the spinning mill A, B, C;
- coordination of operators and their tasks with the spinning mill A, B, C;
- coordination and allocation of human resources (labour) to different process steps.
- preventive or predictive maintenance of a textile machine 4.

The determined parameters 9 are as well put into the fourth database 7₄ in order to enrich the collection of determined parameters. This helps to improve the stability, the quality as well as the speed of subsequent parameter determinations.

The central device 1 further comprises a transmission section 15 adapted to transmit determined adapted machine parameters to the textile machines 4 and the units 5. According to the parameters calculated, either the machines settings are adapted or the operator runs the spinning process accordingly.

Once adapted settings 9 are determined and before they are transmitted to the corresponding machine, they can be checked by a validity check section 10 adapted to check the validity of the machine parameters. The check section verifies the newly determined parameters 9 of the machines with the specified operation mode of the machine in order to avoid unspecified operational modes and prevent damages. The validity check section 10 can be part of the setting manager 2 or of the central device 1.

The databases 7_{1a, b, c} are updated with data from the spinning mills A, B, C, also based on results which are derived from the newly defined parameters.

The advantage of the proposed approach including neural network 12 alone or in combination with Cased-Based Reasoning (CBR) lies in the fact that the new settings can be determined outside the given solution space of already existing data in the databases 7_{1a, b, c}, 7₂, 7₃, 7₄.

The benefit of the present invention lies in the potential of neural network approaches to learn and optimise parameters of spinning mill machines, systems and process settings within the currently available frame of data as well as beyond that. The invention is suited to come up with adapted parameters and will automatically update its predictions based on the data gained during the operation.

### Reference numbers

- 1: Central device
- 2: Parameter manager
- 3: Terminal device
- 4: Textile machine
- 40: Control section of textile machine 4
- 5: Unit of textile machine 4
- 6: Communication network
- 7₁ₐ: Database (of spinning mill A)
- 7_{1b}: Database (of spinning mill B)
- 7_{1c}: Database (of spinning mill C)
- 7₂: Reference database
- 7₃: Database of empirical data
- 7₄: Database of newly calculated parameter
- 8: Processing unit
- 9: Parameter
- 10: Validity check section
- 11: Cased-based reasoning (CBR) System
- 12: Neural network
- 13: Mathematical control and filtering device
- 14: Parameter request input
- 15: Receiving and transmitting section

- A: Spinning mills
- B: Spinning mills
- C: Spinning mills

## Claims

1. Parameter manager (2) for determining adapted operational parameters of textile machines (4) and processes within spinning mills (A, B, C) with respect to at least one of the following production quality, usage of raw material, reduced waste, conversion costs like costs of energy, labour costs, maintenance costs and consumables costs as well as increase of production volume and ideal batch allocation to different machines (4) within the spinning mill (A, B, C), **characterised in that**
said parameter manager (2) comprises a processing unit (8) comprising at least a neural network (12), said neural network (12) uses algorithms for or derived from supervised, unsupervised, machine and/or deep learning.

2. Parameter manager (2) according to claim 1, **characterised in that** the processing unit (8) further comprises a Cased-Based Reasoning (CBR) system (11) and a mathematical control and filtering device (13) for checking the results of the parameters calculated by the neural network and said processing unit (8) is adapted to weighted recalculate both calculated parameters based on a probability function or to choose according to a given probability.

3. Parameter manager (2) according to any of the claims 1 or 2, **characterised in that** the parameter manager (2) manages parameters defining at least one of the following
• raw material input;
• allocations of spinning machine to individual batches mix of raw material qualities;
• specific allocation of bales in a blow room;
• optimal use of textile machines (4);
• the operation of the textile machines (4);
• specific components of the textile machines (4);
• process settings and definitions;
• settings of auxiliary systems;
• definition of the material flow within the spinning mill (A, B, C);
• coordination of operators and their tasks with the spinning mill (A, B, C);
• coordination and allocation of human resources (labour) to different process steps.
• preventive or predictive maintenance of a textile machine (4).

4. A method of determining adapted operational parameters of machines (4) and processes within spinning mills (A, B, C) by a parameter manager (2) according to any of the claims 1 to 3 with respect to at least one of the following production quality, usage of raw material, reduced waste, conversion costs like costs of energy, labour costs, maintenance costs and consumables costs as well as increase of production volume and ideal batch allocation to different machines (4) within the spinning mill (A, B, C), the method is **characterised in** the step of determining adapted parameters based on a neural network (12), said neural network (12) uses algorithms for or derived from supervised, unsupervised, machine and/or deep learning.

5. The method according to claim 4, **characterised in** the step of checking said adapted parameter calculated by the neural network (12) by Cased-Based Reasoning (CBR) and traditional mathematical models and based on a probability function, both calculated parameters are weighted recalculated or chosen according to a given probability.

6. The method according to claim 4 or 5, **characterised in** the step of training the neural network (12) in a first place on the basis of data of quality surveyed production tests and trials having high quality of reliability, preferably the data is treated beforehand with a Case-Based Reasoning (CBR) and/or traditional mathematical models.

7. The method according to claim 4 to 6, **characterised in that** said neural network (12) using as data
• operational information from spinning mills (A, B, C), textile machines (4), sensors and auxiliary spinning devices; and/or
• reference data of quality surveyed production tests and trials; and/or
• empirical data collected from textile specialists of spinning mills or textile technologists and/or
• newly determined parameters.

8. The method according to claim 4 to 7, **characterised in that** said neural network (12) accesses unstructured databases (7_{1a, b, c}, 7₂, 7₃, 7₄) alone or in combination structured databases (7_{1a, b, c}, 7₂, 7₃, 7₄).

9. The method according to any of the claims 4 to 8, **characterised in that** said algorithms of the neural network (12) use for data of different quality levels different weightings.

10. A central device (1) connected to at least one terminal device provided in each of a plurality of spinning mills (A, B, C) via a communication network (6) comprising:
• a receiving section (15) adapted to receive
∘ plant identification information to identify a spinning mill (A, B, C);
∘ machine identification information to identify each textile machine (4) of a plurality of textile machines (4);
∘ unit identification information to identify each unit of a plurality of units (40) of the textile machine (4); and
∘ a plurality of pieces of operational information from spinning mills (A, B, C), textile machines (4), sensors and auxiliary spinning devices;
• a first database (7_{1a, b, c}) in which the plurality of pieces of operational information received by the receiving section (15) in association with the plant identification information, the machine identification information, and the unit identification information is stored;
• a second database (7₂) in which reference data is stored regarding quality surveyed production tests and trials;
• a third database (7₃) in which empirical data is stored collected from textile specialists of spinning mills (A, B, C) or from textile technologists;
• a fourth database (7₄) in which newly determined parameter data is stored;
• a parameter manager (2) according to any of the claims 1 to 3 adapted to determine machine parameters based on information stored in the first, second, third and/or fourth database (7_{1a, b, c}, 7₂, 7_{3,} 7₄);
• wherein said parameter manager (2) comprises a processing unit (8) comprising at least a neural network (12) using algorithms for or derived from supervised, unsupervised, machine and/or deep learning; and
• a transmission section (15) adapted to transmit determined adapted machine parameters to the spinning mill (A, B, C), textile machines (4) and/or the units (40).

11. The central device (1) according to claim 10, wherein the processing unit (8) further comprises a Cased-Based Reasoning (CBR) system (11) and a mathematical control and filtering device (13) for checking the results of the parameters calculated by the neural network and the processing unit (8) is adapted to weighted recalculate both calculated parameters based on a probability function or to choose according to a given probability.

12. The central device (1) according to claim 10 or 11, wherein the first, second, third and/or fourth database (7_{1a, b, c}, 7₂, 7₃, 7₄) is an unstructured database.

13. The central device (1) according to any of the claims 10 to 12, further comprising a validity check section (10) adapted to check the validity of the determined machine parameters by the parameter manager (2).

14. A method of adapting operational parameters of a textile machine (4), comprising the steps of
• measuring one or a plurality of pieces of operational information from a spinning mill (A, B, C), the textile machine (4) and sensors;
• transmitting the measured operational information from the textile machine (4) to a central device (1) according to claim 9;
• determining by a parameter manager (2) according to any of the claims 1 to 3 adapted machine parameters based on a first, second, third and/or fourth database (7_{1a, b, c}, 7₂, 7₃, 7₄) using a neural network (12), said neural network (12) comprise algorithms for or derived from supervised, unsupervised, machine and/or deep learning; wherein
∘ the first database (7_{1a, b, c}) in which the plurality of pieces of operational information in association with the plant identification information, the machine identification information, and the unit identification information is stored;
∘ the second database (7₂) in which reference data is stored regarding quality surveyed production tests and trials;
∘ the third database (7₃) in which empirical data is stored collected from textile specialists of spinning mills or from textile technologists;
∘ the fourth database (7₄) in which newly determined parameters is stored;
• transmitting determined adapted parameters from the central device (4) to the spinning mill (A, B, C); and
• adapting the parameters of the spinning mill (A, B, C), textile machines (4) and/or the units (40).

15. The method according the preceding claim, **characterised in** the step of checking said adapted parameter calculated by the neural network (12) by Cased-Based Reasoning (CBR) and traditional mathematical models and based on a probability function, both calculated parameters are weighted recalculated or chosen according to a given probability.

16. The method according to claim 14 or 15, **characterised in** the step of determining by said parameter manager (2) parameters defining at least one of the following
• raw material input;
• allocations of spinning machine to individual batches mix of raw material qualities;
• specific allocation of bales in a blow room;
• optimal use of textile machines (4);
• the operation of the textile machines (4);
• specific components of the textile machines (4);
• process settings and definitions;
• settings of auxiliary systems;
• definition of the material flow within the spinning mill (A, B, C);
• coordination of operators and their tasks with the spinning mill (A, B, C);
• coordination and allocation of human resources (labour) to different process steps.
• preventive or predictive maintenance of a textile machine (4).

17. The method according to claim 15 to 16, wherein said neural network (12) accesses unstructured databases (7_{1a, b, c}, 7₂, 7₃, 7₄) alone or in combination with structured databases (7_{1a, b, c}, 7₂, 7₃, 7₄).

18. The method according to any of the claims 14 to 17, **characterised in that** said algorithms of the neural network (12) use for data of different quality levels different weightings.

19. The method according to any of the preceding claims 14 to 18, **characterised in that** the parameters are adapted automatically or are displayed and adapted manually by an operator.
